(19) Europäisches Patentamt
European Patent Office
Office européen des brevets

(11) Publication number: 0 038 570
B1

(12) EUROPEAN PATENT SPECIFICATION

(45) Date of publication of patent specification: 28.09.83

(21) Application number: 81103047.7

(22) Date of filing: 22.04.81

(51) Int. Cl.³: A 01 N 59/20, A 01 N 47/14, A 01 N 47/04, A 01 N 37/46 //(A01N59/20, 37/46), (A01N47/14, 37/46), (A01N47/04, 37/46), (A01N37/46, 37/32)

# (54) Fungicidal compositions.

(30) Priority: 22.04.80 IT 2153780

(43) Date of publication of application: 28.10.81 Bulletin 81/43

(45) Publication of the grant of the patent: 28.09.83 Bulletin 83/39

(84) Designated Contracting States: BE CH DE FR GB LI NL

(56) References cited:
FR - A - 2 416 216
FR - A - 2 426 411

(73) Proprietor: Montedison S.p.A.
Patents & Licensing Dept. Foro Buonaparte, 31
P.O. Box 10528
I-20121 Milan (IT)

(72) Inventor: Lorusso, Simone
22, Via Boccaccio
San Giuliano Milanese (Milan) (IT)
Inventor: Mirenna, Luigi
4, Via Gamboloita
Milan (IT)
Inventor: Dal Moro, Anacleto
13, Via G.B. Morgagni
Milan (IT)

(74) Representative: Schmied-Kowarzik, Volker, Dr. et al,
Patentanwälte Dr. V. Schmied-Kowarzik Dipl.-Ing. G. Dannenberg Dr. P. Weinhold Dr. D. Gudel Dipl.-Ing. S. Schubert Siegfriedstrasse 8
D-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 038 570 B1

Courier Press, Leamington Spa, England

## Fungicidal compositions

This invention relates to fungicidal compositions; more particularly it relates to fungicidal compositions containing two active principles: the fungicide N - (2,6 - dimethyl - phenyl) - N - (1 - methoxycarbonyl - ethyl) - phenylacetamide (A) and a conventional fungicide selected from:

B — Dithiocarbamates
C — N-haloalkylthio-imides
D — Copper oxychloride.

Fungicidal compound N-(2,6-dimethyl-phenyl)-N-(1-methoxy-carbonyl-ethyl)-phenylacetamide of formula:

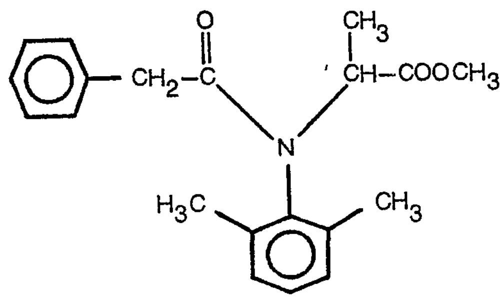

(A)

has been described in Italian Patent Application No. 25295 A/78 in the name of the Applicant.

Compound A is a fungicide endowed with a remarkable anti-mildew activity, a low phytoxicity and systemic action.

This last characteristic, which is useful in many respects of the antifungal fight, presents however a drawback common to all the systemic fungicides. In fact, when the plant's vegetative activity decreases, the systemic fungicide becomes less mobile and consequently less effective.

This fact causes the necessity to co-formulate the systemic product along with other non systemic fungicides.

In the course of our studies on the co-formulation of fungicide A we have surprisingly found that the coupling of said fungicide with known fungicides belonging to the class of the Dithiocarbamates, or to the class of the N-haloalkylthio-amides, or with copper oxychloride, results to be synergistic as the mixture of the two compounds proves remarkably more active than the individual compounds at the considered doses.

Thus it is an object of the present invention to provide synergistic mixtures of compound N - (2,6 - dimethylphenyl) - N - (1 - methoxycarbonyl - ethyl) - phenylacetamide (A) and of a compound selected from

B — Dithiocarbamates
C — N-haloalkylthio-imides
D — Copper oxychloride

Dithiocarbamates (group B) comprise for example:

Zineb: common name of zinc ethylene-bis-dithiocarbamate;
Maneb: common name of manganese ethylene-bis-dithiocarbamate;
Nabam: common name of sodium ethylene-bis-dithiocarbamate;
Mancozeb: common name of a coordination compound of zinc ions with manganese ethylene-bis-dithiocarbamate, in which the ratio between zinc ions and manganese ions is 1:8;
Propineb: common name of zinc 1,2-propylene-bis-dithiocarbamate.

N-haloalkylthio-imides (group C) comprise for example
Folpet: common name of compound N-trichloromethylthiophthalimide;
Captan: common name of compound N-trichloromethylthio-$\Delta^4$-tetrahydrophthalimide;
Captafol: common name of compound N-(1,1,2,2-tetrachloroethylthio)-$\Delta^4$-tetrahydrophthalimide.

In the abovesaid mixtures components B, C or D are present in amounts of from 3 to 1000 times component A.

A further object of this invention is to provide fungicidal compositions containing as active principle the synergistic mixtures listed hereinbefore. In the above-mentioned compositions the mixture

of the two active principles (compound A and compounds of groups B, C or D) is contained in amounts of from 3 to 90% by weight.

Said compositions are useful to fight fungal infections in useful plants such as, for example, vine, tobacco, tomato, potato and other horticultural cultures.

The most important class of fungi due to the damages caused and which can be successfully fought by using the abovesaid compositions is that of Phycomycetes which comprises *Plasmopara spp. Phytophtora spp., Peronospora spp., Pseudoperonospora spp.* and *Phytium spp.*

The fungicidal compositions forming the object of the present invention contain, besides the active mixture, other inert substances and, optionally, additives. The components are chosen mainly as a function of the composition to be prepared. For example, for preparing a dry powder it may be sufficient to add only an inert solid such as kieselguhr, kaolin, talc, colloidal silica, sodium or calcium carbonate.

To prepare a wettable powder it is possible to add to the mixture of active substances:

— inert solid substances such as kieselguhr, (fossilflour), kaolin, talc, colloidal silica,
— wetting agents such as alkylaromatics, alkylphenolsa, polyoxyethylates or sorbitan oleates,
— dispersants such as lignin-sulphonates or polymethacrylates.

The compositions so obtained can be usefully applicated in doses comprised between 1 and 30 kg/ha.

The choice of the most suitable compositions and of the application doses depends on various factors, such as the type of fungus to be fought and the culture to be treated, environment factors and availability of application means.

The following examples are given to better illustrate the present invention.

## Example 1

Methodology for determining the preventive fungicidal activity against *Plasmopara viticola* (B et C) Berl et de Toni, on vine plants.

Vine plants c.v. Dolcetto, cultivated in pots in a conditioned environment at 25°C and 60% of relative humidity, were sprayed, on both faces of the leaves, with a suspension in aqueous acetone (20% by volume of acetone) of the products being tested.

One day after the treatment the lower faces of the leaves were sprayed with an aqueous suspension of conides of *Plasmopara v.* (200,000 conides per cc) and were then kept for 24 hours in a humidity-saturated room at 21°C.

The plants were then transferred to a room conditioned at 21°C and 70% of relative humidity for the fungus incubation period (7 days).

At the end of such period the damages caused to the plants were determined on the basis of the leaf surface (lower faces) covered with conide formation of the fungus.

The fungicidal activity was expressed as reduction in per cent of the fungal infection in comparison with infected, but not preventively treated plants, and it was expressed according to a scale of values ranging from 100 (sound plant) to 0 (fully infected plant).

## Example 2

Synergistic effect.

The synergistic effect of the fungicidal compounds in admixture with one another resulted from the better activity of the mixture of the two components as compared with the theoretical activity of a non synergistic mixture of the two components in the same ratios.

The theoretical fungicidal activity expressed as percentage of reduction of the infection [X (%)] of a non synergistic mixture was calculated through the following formula:

$$X\,(\%) = a\,(\%) + \frac{[100 - a\,(\%)] \cdot b\,(\%)}{100}$$

wherein:

a (%) = fungicidal activity of a pure component at the considered dose, expressed as percentage of infection reduction;

b (%) = fungicidal activity of the other pure component at the considered dose, expressed as percentage of infection reduction.

The data reported hereinbelow refer to the preventive activity against *Plasmopara viticola* on vine plants.

The values of a (%) and b (%) were obtained as described in example 1.

Synergism of fungicide N-(2,6-dimethylphenyl)-N-(1-methoxycarbonyl-ethyl)-phenylacetamide (A) and fungicide Zineb in admixture with each other.

Fungicidal activity of A [a (%)].

| dose (‰) | activity |
|---|---|
| 0.001 | 58 |
| 0.0005 | 28 |

Fungicidal activity of Zineb [b (%)]

| dose (‰) | activity |
|---|---|
| 0.1 | 30 |
| 0.05 | 24 |
| 0.01 | 15 |

Fungicidal activity of mixtures of A and Zineb

| A (‰) | Zineb (‰) | Theoretical activity (X %) | Found activity (%) |
|---|---|---|---|
| 0.001 | 0.1 | 70.6 | 100 |
| 0.001 | 0.05 | 68.8 | 87 |
| 0.001 | 0.01 | 64.3 | 87 |
| 0.0005 | 0.1 | 49.6 | 100 |
| 0.0005 | 0.05 | 45.28 | 88 |
| 0.0005 | 0.01 | 38.8 | 61 |

Synergism of compound A and Mancozeb in admixture with each other.

Fungicidal activity of Mancozeb (b %)

| dose (‰) | activity (%) |
|---|---|
| 0.05 | 80 |
| 0.01 | 14 |

Fungicidal activity of mixtures of A and Mancozeb

| A (‰) | Mancoszeb (‰) | Theoretical activity [X (%)] | Found activity (%) |
|---|---|---|---|
| 0.001 | 0.05 | 91.6 | 100 |
| 0.001 | 0.01 | 63.88 | 88 |
| 0.0005 | 0.05 | 85.6 | 100 |
| 0.0005 | 0.01 | 38.08 | 58 |

Synergism of compound A and Captafol in admixtures with each other.

Fungicidal activity of Captafol (b%)

| dose (‰) | activity (%) |
|---|---|
| 0.05 | 90 |
| 0.01 | 65 |
| 0.001 | 50 |

Fungicidal activity of mixtures of A and Captafol.

| A (‰) | Captafol (‰) | Theoretical activity [X (%)] | Found activity (%) |
|---|---|---|---|
| 0.001 | 0.05 | 95.8 | 100 |
| 0.001 | 0.01 | 85.3 | 100 |
| 0.001 | 0.001 | 79.0 | 90 |
| 0.0005 | 0.05 | 92.8 | 100 |
| 0.0005 | 0.01 | 74.8 | 90 |
| 0.0005 | 0.001 | 64.0 | 70 |

Synergism of compound A and copper oxychloride in admixture with each other.

Fungicidal activity of copper oxychloride (b %)

| dose (‰) | activity (%) |
|---|---|
| 0.1 | 45 |
| 0.05 | 42 |
| 0.01 | 32 |

Fungicidal activity of mixtures of A and copper oxychloride

| A (‰) | Copper oxychloride (‰) | Theoretical activity [X (%)] | Found activity (%) |
|---|---|---|---|
| 0.001 | 0.1 | 77.0 | 85 |
| 0.001 | 0.05 | 75.7 | 80 |
| 0.001 | 0.01 | 71.5 | 74 |
| 0.0005 | 0.1 | 60.0 | 75 |
| 0.0005 | 0.05 | 58.2 | 65 |
| 0.0005 | 0.01 | 51.1 | 60 |

Example 3

Preparation of compositions in wettable powder

General method: the various components of the composition were mixed with one another and homogenized by grinding in an air jet mill till obtaining particles having average sizes of 5—6 $\mu$m.

Following the abovesaid operative modalities the compositions recorded on following Table 1 were prepared.

TABLE 1

Fungicidal compositions in wettable powder (the amounts of the components are expressed in per cent by weight).

| Components \ Composition No. | 1 | 2 | 3 | 4 | 5 | 6 | 7 | 8 | 9 |
|---|---|---|---|---|---|---|---|---|---|
| Compound A | 5 | 5 | 4 | 5 | 1 | 8 | 17 | 17 | 11 |
| Zineb | 50 | | | | 10 | 80 | 54 | | |
| Mancozeb | | 50 | | | | | | 54 | |
| Copper oxychloride | | | 80 | | | | | | 70 |
| Folpet | | | | 50 | | | | | |
| kaolin | 39 | 40 | 4 | | 83 | 4 | 23 | 23 | 9 |
| synthetic silica | | | 6 | | | | | | 4 |
| kieselguhr | | | | 40 | | | | | |
| sodium alkylnaphthalene sulphonate | | 1 | | 1 | 2 | | | 1 | |
| sodium alkylsulphosuccinate | 2 | | 2 | | | 2 | 2 | | 2 |
| sodium lignin-sulphonate | 2 | 4 | | 4 | | 3 | | 3 | |
| sodium polymethacrylate | 2 | | 4 | | 4 | 3 | 4 | 2 | 4 |

Example 4

Preparation of compositions in dry powder

General method: The composition components were mixed with one another and homogenized by grinding in a mechanical impact stud mill.

Operating according to the abovecited operative modalities the compositions reported on Table 2 were prepared.

TABLE 2

Compositions in dry powder. (The amounts of the components are expressed in per cent by weight).

| Components \ Composition No. | 10 | 11 |
|---|---|---|
| Compound A | 0.5 | 0.1 |
| Mancozeb | 5 | 10 |
| Synthetic silica | 3.5 | 3.9 |
| Talc | 91 | 86 |

## Claims

1. Mixtures of fungicides consisting of N-(2,6-dimethylphenyl)-N-(1-methoxycarbonyl-ethyl)-phenylacetamide (A) and of a compound selected from:
— Dithiocarbamates (B)
— N-haloalkylthio-imides (C)
— Copper oxychloride (D)
in a ratio ranging fom 1:3 to 1:1000.

2. Mixtures according to claim 1, consisting of compound A and of zinc ethylene-bis-dithiocarbamate (Zineb).

3. Mixtures according to claim 1, consisting of compound A and of manganese and zinc ethylene-bis-dithiocarbamate (Mancozeb).

4. Mixtures according to claim 1, consisting of compound A and of N-(1,1,2,2-tetrachloroethylthio)-$\Delta^4$-tetrahydrophthalimide (Captafol).

5. Mixtures according to claim 1, consisting of compound A and of copper oxychloride.

6. Fungicidal compositions containing, as active principle a mixture according to any of the preceding claims besides inert substances and optionally additives.

7. Compositions according to claim 6, characterized in that the mixture of active substances is contained in amounts ranging from 3 to 90% by weight.

8. A method of fighting fungine infections in useful plants consisting in distributing onto the plants fungicidal compositions according to claims 6 or 7, in amounts of from 1 to 30 Kg/ha.

9. A method of fighting infections due to *Plasmopara viticola* on vine plants according to claim 8, consisting in distributing onto the vine plants fungicidal compositions according to claims 6 or 7.

10. Process for preparing fungicidal compositions in wettable or in dry powder form according to claims 6 or 7, consisting in mixing the ingredients and in homogenizing them by grinding in a suitable mill.

## Revendications

1. Mélanges de fongicides constitués de N-(2,6-diméthylphényl)-N-(1-méthoxycarbonyl-éthyl)phénylacétamide (A) et d'un composé choisi parmi les:
— dithiocarbamates (B),
— N-haloalkylthio-vides (C),
— oxychlorure de cuivre (D),
dans un rapport allant de 1:3 à 1:1000.

2. Mélanges suivant la revendication 1, constitués de composant A et d'éthylène-bis-dithiocarbamate de zinc (Zineb).

3. Mélanges suivant la revendication 1, constitués de composant A et d'éthylène-bis-dithiocarbamate de manganèse et de zinc (Mancozeb).

4. Mélanges suivant la revendication 1, constitués de composant A et de N-(1,1,2,2-tétrachloro-éthylthio)-$\Delta^2$-tétrahydrophthalimide (Captafol).

5. Mélanges suivant la revendication 1, constitués de composant A et d'oxychlorure de cuivre.

6. Compositions fongicides contenant en tant que principe actif un mélange suivant l'une quelconque des revendications précédentes, ainsi que des substances inertes et éventuellement des additifs.

7. Compositions suivant la revendication 6, caractérisées en ce que le mélange de substances actives est present en quantité allant de 3 à 90% en poids.

8. Procédé de lutte contre les infections fongiques dans les plantes utiles consistant à distribuer sur les plantes des compositions fongicides suivant les revendications 6 ou 7, en quantité de 1 à 30 kg/ha.

9. Procédé de lutte contre les infections dues au *Plasmopara viticola* sur les plants de vigne suivant la revendication 8, consistant à répartir sur les plants de vigne des compositions fongicides suivant les revendications 6 ou 7.

10. Procédé de préparation de compositions fongicides sous forme de poudre mouillable ou de poudre sèche, suivant les revendications 6 ou 7, consistant à mélanger les ingrédients et à les homogénéiser par broyage dans un broyeur.

**Patentansprüche**

1. Mischungen von Fungiziden, bestehend aus N-(2,6-Dimethylphenyl)-N-(1-methoxycarbonylethyl)-phenylacetamid (A) und einer Verbindung, ausgewählt aus
— Dithiocarbamaten (B),
— N-Halogenalkylthio-imiden (C),
— Kupferoxychlorid (D),
in einem Verhältnis von 1:3 bis 1:1000.

2. Mischungen nach Anspruch 1, bestehend aus Verbindung A und Zink-ethylen-bisdithiocarbamat (Zineb).

3. Mischungen nach Anspruch 1, bestehend aus Verbindung A und Manganund Zink-ethylen-bisdithiocarbamat (Mancozeb).

4. Mischungen nach Anspruch 1, bestehend aus Verbindung A und N-(1,1,2,2-Tetrachloroethylthio)-$\Delta^4$-tetrahydrophthalimid (Captafol).

5. Mischungen nach Anspruch 1, bestehenfaus Verbindung A und Kupferoxychlorid.

6. Fungizide Zusammensetzungen, enthaltend als aktiven Bestandteil eine Mischung nach einem der vorhergehenden Ansprüche sowie inerte Substanzen und wahlweise Zusätze.

7. Zusammensetzungen nach Anspruch 6, dadurch gekennzeichnet, das die Mischung der aktiven Substanzen in Mengen von 3 bis 90 Gew.-% enthalten ist.

8. Verfahren zum Bekämpfen von Fungusinfektionen bei Nutzpflanzen, bei dem auf den Pflanzen fungizide Zusummensetzungen gemäß Anspruch 6 oder 7 in Mengen von 1 bis 30 kg/ha verteilt werden.

9. Verfahren zur Bekämpfung von Infektionen durch Plasmopara viticola auf Reben gemäß Anspruch 8, bei dem auf die Reben die fungiziden Zusammensetzungen gemäß Anspruch 6 oder 7 vertielt werden.

10. Verfahren zur Herstellung fungizider Zusammensetzungen in Form eines benetzbaren oder trockenen Pulvers gemäß Anspruch 6oder 7, bei dem die Bestandteile gemischt und durch Vermahlen in einer Mühle homogenisiert werden.